# FASCICULE DE BREVET EUROPEEN

(11) **EP 3 023 328 B1**
(45) Date de publication et mention de la délivrance du brevet: **23.05.2018**
(21) Numéro de dépôt: 15194282.8
(22) Date de dépôt: 12.11.2015
(51) Int. Cl.: B64C 27/82

(54) **AERONEF A VOILURE TOURNANTE MUNI D'UN ROTOR ARRIERE NON CARENE COMPRENANT AU MOINS CINQ PALES**
DREHFLÜGELFLUGZEUG, DAS MIT EINEM NICHT UMMANTELTEN HECKROTOR MIT MINDESTENS FÜNF ROTORBLÄTTERN AUSGERÜSTET IST
A ROTARY WING AIRCRAFT HAVING A NON-DUCTED TAIL ROTOR WITH AT LEAST FIVE BLADES

(30) Priorité: 20.11.2014 FR 1402616
(43) Date de publication de la demande: 25.05.2016
(73) Titulaire: Airbus Helicopters, 13725 Marignane Cedex (FR)
(72) Inventeur: CERTAIN, Bernard, 13090 AIX EN PROVENCE (FR)
(74) Mandataire: GPI & Associés

(56) Documents cités:
- EP-A1- 0 018 114
- FR-A- 1 411 762
- FR-A1- 2 719 554
- US-A- 2 818 224

## Description

La présente invention concerne un aéronef à voilure tournante muni d'un rotor arrière non caréné comprenant au moins cinq pales. L'invention appartient ainsi au domaine technique des rotors arrière de giravion.

Usuellement un giravion est muni d'au moins un rotor principal assurant au moins partiellement la sustentation de ce giravion, voire sa propulsion. En particulier, un hélicoptère comporte par exemple un unique rotor assurant sa sustentation et sa propulsion. En raison de cette fonction, un tel rotor est dénommé « rotor principal ».

Ce rotor principal peut être entraîné par une boîte de transmission de puissance mise en mouvement par au moins un moteur. Lors de sa rotation, le rotor principal induit un couple sur le fuselage de l'hélicoptère. Ce couple tend alors à générer un mouvement giratoire du fuselage autour d'un axe de lacet. Par conséquent, un hélicoptère muni d'un unique rotor principal est usuellement pourvu d'un dispositif pour contrôler son mouvement en lacet.

Un tel dispositif peut comprendre un rotor auxiliaire agencé à l'arrière de l'hélicoptère. Ce rotor auxiliaire exerce une poussée ayant au moins une composante transversale pour contrôler le mouvement en lacet de l'aéronef. Dès lors, ce rotor auxiliaire est dénommé parfois « rotor arrière » en raison de son agencement, ou encore « rotor anticouple » en raison de sa faculté à contrer le couple généré par le rotor principal sur le fuselage. L'expression « rotor arrière » est notamment utilisée par la suite.

Pour contrôler le mouvement en lacet de l'aéronef, un pilote commande le pas collectif des pales du rotor arrière. La modification de ce pas collectif induit en effet une modification de la poussée générée par le rotor arrière. Par exemple, un pilote manoeuvre un palonnier relié au rotor arrière pour commander le mouvement de l'aéronef autour de son axe de lacet.

Selon une première alternative, le rotor arrière est un rotor non caréné.

Un tel rotor arrière non caréné comporte un moyeu décalé transversalement par rapport à une dérive. Ce moyeu porte au moins deux pales de grandes envergures. Ces pales présentent des profils avec des cordes relativement importantes.

Ainsi, un hélicoptère léger comprend parfois un rotor arrière articulé muni de deux pales. Un hélicoptère lourd peut comporter au moins cinq pales. Le nombre de pales est déterminé en fonction de la poussée à fournir pour contrôler le mouvement en lacet de l'aéronef. Un constructeur tend à minimiser ce nombre de pales pour optimiser le nombre de pièces du rotor, leur prix et leur masse.

Le document US 2818224 présente un aéronef muni d'un rotor arrière non caréné porté par une dérive verticale.

Par ailleurs, l'hélicoptère Ecureuil® comporte deux pales reliées diamétralement par un longeron commun. Ce longeron est articulé à un arbre d'entraînement. Ainsi, deux demi-coquilles enserrent le longeron. Les demi-coquilles sont articulées à une chape de l'arbre par une broche. Un tel rotor arrière est qualifié de « rotor articulé » en raison de son articulation à un arbre d'entraînement.

Le longeron comporte deux zones torsibles disposées de part et d'autre des demi-coquilles. Par suite, chaque zone torsible peut être vrillée pour autoriser une modification de l'angle de pas de chaque pale.

Pour piloter l'angle de pas d'une pale de rotor arrière, l'aéronef comprend une bielle de pas par pale. Chaque bielle de pas est articulée à l'emplanture de la pale. Par exemple, une collerette est solidarisée au revêtement de l'emplanture d'une pale, cette collerette étant alors articulée à une bielle de pas.

Par ailleurs, des paliers lamifiés sont agencés entre les demi-coquilles et les collerettes. Ces paliers sont déformables en torsion et en cisaillement.

Des commandes de vol sont par conséquent reliées aux bielles de pas pour contrôler la rotation de chaque pale autour d'un axe de pas. Cette rotation induit la torsion des zones torsibles du longeron.

En outre, chaque pale subit en vol des efforts aérodynamiques.

En effet, les pales d'un rotor arrière non caréné évoluent dans un flux d'air généré par l'avancement de l'hélicoptère. Ce flux d'air est dit « flux d'air longitudinal » par la suite, en référence au sens d'avancement longitudinal de l'aéronef.

Par suite, lors de sa rotation, chaque pale tourne sur un demi-tour selon le sens d'avancement de l'hélicoptère dans une position dite de « pale avançante ». A l'inverse, chaque pale tourne sur un autre demi-tour selon le sens inverse au sens d'avancement de l'hélicoptère dans une position dite de « pale reculante ».

Par suite, une pale avançante évolue à une vitesse égale à la somme de la vitesse de rotation du rotor arrière et de la vitesse d'avancement de l'aéronef. A l'inverse, une pale reculante évolue à une vitesse égale à la différence de la vitesse de rotation du rotor arrière et de la vitesse d'avancement de l'aéronef. Or, la portance générée par une pale varie en fonction de sa vitesse par rapport au flux d'air incident. Dès lors, une pale génère une portance plus faible dans sa position de pale reculante que dans sa position de pale avançante.

Le rotor arrière étant articulé, cette différence de portance génère un basculement du rotor arrière autour d'un axe de basculement sensiblement vertical. Cet axe de basculement correspond à l'axe de la broche articulant les demi-coquilles du rotor à un arbre d'entraînement.

Ce basculement dynamique du rotor arrière génère des efforts dynamiques dans la chaîne de commande du pas des pales.

En particulier, la bielle de pas d'une pale peut être radialement décalée par rapport à un axe de battement de cette pale, à savoir l'axe de la broche dans le cadre du rotor arrière décrit précédemment.

Par suite, le basculement du rotor tend alors à exercer un effort dynamique sur chaque bielle de pas.

En outre, des efforts statiques sont aussi introduits dans la chaîne de commande du pas des pales.

En effet, chaque pale tend à subir un moment de rappel provoqué par la force centrifuge exercée sur cette pale. Ce moment de rappel a pour effet de ramener chaque pale dans le plan de rotation du rotor. Ce moment de rappel à plat induit la création d'efforts dans chaque bielle de pas.

Par suite, la rotation d'une pale induit la création d'efforts statiques et dynamiques dans la chaîne de commande du pas des pales. Un pilote peut alors éprouver des difficultés pour modifier le pas des pales, en manoeuvrant un palonnier par exemple.

Pour y remédier, une servocommande peut être interposée dans une chaîne de commande. Les commandes de vol du pilote sont alors reliées à la servocommande, cette servocommande étant reliée à chaque bielle de pas.

Toutefois, l'agencement d'une servocommande peut générer un accroissement de masse non négligeable.

En outre, en cas de panne hydraulique, la servocommande se comporte comme une bielle. Pour assister le pilote dans cette configuration, l'aéronef peut comprendre un compensateur d'efforts. Un compensateur d'efforts peut comporter un accumulateur de pression hydraulique et un levier de commande interposé entre les bielles de pas et la servocommande.

Pour réduire les efforts générés sur une chaîne de commande de pas et notamment les efforts statiques, le pied de chaque pale peut être muni de deux organes pesants dits « masses chinoises ».

Chaque masse chinoise saille en élévation du revêtement d'une pale pour créer un moment tendant à s'opposer au moment de rappel. Cependant, les masses chinoises ont une efficacité limitée sur les efforts dynamiques subis en vol, voire peuvent tendre à accroitre ces efforts dynamiques.

Dès lors, un rotor arrière non caréné peut être un rotor articulé subissant des efforts statiques et dynamiques susceptibles de durcir des commandes de vol. De plus, ces efforts peuvent être pénalisants pour la durée de vie des paliers lamifiés par exemple.

Par ailleurs, un rotor arrière non caréné est usuellement porté par une dérive de faibles dimensions. Par conséquent, en cas de rupture de la chaîne de transmission de puissance entraînant en rotation le rotor arrière, la dérive risque de générer une portance latérale insuffisante pour contrer le couple généré par le rotor principal.

Selon une deuxième alternative, le rotor arrière est un rotor arrière caréné.

Le rotor arrière caréné comporte une carène. Cette carène est une partie constitutive d'une dérive de grandes dimensions.

En outre, le rotor arrière caréné comporte un rotor de petites dimensions agencé dans cette carène. Ce rotor est pourvu d'un moyeu portant des pales de faibles envergures dont les profils présentent des cordes relativement faibles.

La poussée générée par le rotor est alors relativement faible, de l'ordre de la moitié de la poussée générée par un rotor arrière non caréné. Néanmoins, la carène génère aussi une poussée de l'ordre de la moitié de la poussée générée par un rotor arrière non caréné. Dès lors, la carène et le rotor d'un rotor arrière caréné génèrent conjointement une poussée totale suffisante pour contrôler le mouvement en lacet de l'aéronef.

L'agencement d'un rotor arrière caréné est intéressant mais nécessite néanmoins la mise en place d'une dérive de dimensions importantes. Une telle carène est alors pénalisante d'un point de vue massique.

En outre, la carène protège la partie rotative d'un rotor arrière caréné contre l'impact d'un flux d'air longitudinal. Par suite, un rotor arrière caréné évite de créer des efforts dynamiques en agençant une carène autour des pales.

Le document FR 2719554 décrit un rotor arrière caréné.

Le document FR 2699497 décrit un dispositif de liaison d'une pale à un moyeu applicable aux pales et rotor multipale, à pas variable, pour rotor arrière caréné d'hélicoptère.

Des documents n'appartenant par au domaine technique de l'invention sont cités à titre informatif uniquement.

Le document US 2012/0219417 présente un rotor à pales rétractables.

Le document US 2004/0113013 présente un rotor de sustentation muni d'un anneau périphérique.

Le document US 4913376 présente deux rotors contrarotatifs d'un autogyre.

Le document US 4195800 présente un rotor de sustentation d'un autogyre muni d'un disque central de grandes dimensions.

Les documents FR 1411762 et EP0018114 sont aussi connus.

La présente invention a alors pour objet de proposer un rotor alternatif aux rotors décrits précédemment pour limiter les efforts dans une chaîne de commande du pas des pales du rotor.

L'invention a alors trait à un rotor arrière non caréné pour un aéronef à voilure tournante, ce rotor arrière non caréné comprenant un moyeu et une pluralité de pales, le rotor arrière non caréné comprenant un arbre d'entraînement relié au moyeu pour mettre en rotation les pales autour d'un axe de rotation, les pales s'étendant chacune jusqu'à une extrémité libre décrivant en rotation un cercle présentant un rayon donné dit « rayon maximal » comme définit dans la revendication 1. Le rayon maximal représente donc le rayon du cercle décrit par les pales du rotor arrière non caréné.

Ce rotor arrière non caréné est notamment remarquable en ce que le moyeu est rigidement solidarisé à l'arbre d'entraînement, la pluralité de pales comportant au moins cinq pales, le moyeu comprenant un corps circulaire creux centré sur l'axe de rotation, ce corps présentant un rayon dit « rayon interne » entre l'axe de rotation et une périphérie extérieure du corps, ce rayon interne étant compris entre 0,2 et 0,4 fois le rayon maximal et éventuellement entre 0,25 et 0,4 fois le rayon maximal, chaque pale présentant un pied prolongé par un élément aérodynamique saillant du corps en s'étendant à partir du pied vers une extrémité libre, le pied étant articulé en rotation à la périphérie extérieure autour d'un axe de pas.

Un élément aérodynamique d'une pale est un élément générant une portance à l'origine de la poussée créée par la pale. Ainsi, une portion de pale située dans un carénage, et par exemple dans le moyeu, n'est pas un élément aérodynamique.

Par conséquent, l'état de la technique décrit un rotor arrière non caréné de grand diamètre muni d'un petit moyeu portant aussi peu de pales que possible. Un tel grand diamètre est par exemple supérieur à 1,5 mètre, le diamètre du moyeu étant de l'ordre de 10 centimètres par exemple.

Pour améliorer ce concept, l'état de la technique fait état d'un rotor caréné de faible diamètre, de l'ordre du mètre par exemple. Néanmoins, un tel rotor caréné n'est pas sujet aux problèmes résultant de la création d'efforts dynamiques en vol. De plus, la présence de la carène confère au rotor arrière caréné une masse importante rendant difficile son implémentation sur un giravion existant pour des raisons de centrage.

A l'inverse, l'invention propose un rotor arrière non caréné innovant de grand diamètre, par exemple supérieur à 1.5 mètre. Ce rotor arrière non caréné est en outre muni d'un grand moyeu circulaire portant au moins cinq pales, et favorablement au moins 6 ou 8 pales.

Sur un rotor arrière non caréné bipale selon l'état de la technique dit « rotor conventionnel » par la suite, chaque pale présente une envergure et une corde importantes. A l'inverse, en multipliant le nombre de pales par un coefficient multiplicateur, l'invention permet de diminuer la corde des pales.

Par exemple, un rotor conventionnel peut comporter deux pales munies de profils présentant chacun une corde de 21 centimètres, ce qui équivaut à un profil ayant une corde totale de 42 centimètres en additionnant la corde des deux pales.

Un rotor arrière non caréné selon l'invention peut par exemple comporter six pales présentant chacune une corde de 7 centimètres, ce qui conduit dès lors à une seule corde équivalente de 42 centimètres.

De même, si les profils des pales d'un rotor conventionnel et les profils des pales d'un rotor arrière non caréné selon l'invention sont identiques, les pales d'un rotor arrière non caréné selon l'invention ont une épaisseur sensiblement égale au quotient de l'épaisseur des pales du rotor conventionnel correspondant divisé par ledit coefficient multiplicateur.

Or, l'invention propose de mettre en oeuvre un moyeu de grandes dimensions. Par suite, chaque pale d'un rotor selon l'invention comporte un élément aérodynamique qui s'étend hors du moyeu sur une envergure réduite par rapport à un rotor conventionnel. Par suite, la flexibilité résultant de la faible épaisseur des pales du rotor selon l'invention est tolérable en articulant le pied des pales à la périphérie extérieur du moyeu, et donc en réduisant l'envergure de la surface aérodynamique des pales. Le rotor arrière non caréné selon l'invention répond alors aux exigences en matière de résistance de matériaux vis-à-vis des efforts exercés sur ce rotor.

Pour produire une poussée équivalente à la poussée obtenue sur un rotor conventionnel, l'invention propose donc de multiplier le nombre de pales du rotor conventionnel par un coefficient multiplicateur et de réduire la corde et l'épaisseur de ces pales selon ce coefficient multiplicateur.

Ce dimensionnement particulier est non évident car l'élément aérodynamique des pales du rotor selon l'invention est de fait plus court que l'élément aérodynamique des pales d'un rotor conventionnel équivalent, en raison de la présence d'un moyeu de grand diamètre. La plénitude du rotor selon l'invention est alors plus faible que la plénitude d'un rotor équivalent selon l'état de la technique.

Néanmoins, chaque pale d'un rotor conventionnel peut être découpée virtuellement en une portion interne s'étendant jusqu'à un rayon seuil du rotor, et une portion externe s'étendant de la portion interne vers une extrémité libre. La demanderesse note que l'apport en termes de poussée de la portion interne de chaque pale est faible. Par suite, le remplacement de cette portion interne de l'élément aérodynamique des pales par un moyeu de grand diamètre a un impact limité sur la poussée produite par le rotor.

De plus, l'implémentation d'un moyeu de grand diamètre et la multiplication du nombre de pales pourraient logiquement induire une augmentation importante de la masse du rotor par rapport à un rotor conventionnel correspondant.

Or, en allant à l'encontre de ce préjugé, la demanderesse note que l'impact massique de l'invention est restreint.

En effet, par rapport à un rotor de l'état de la technique, l'invention multiplie le nombre de pales par un coefficient multiplicateur. Cette multiplication s'accompagne d'une réduction selon ce coefficient multiplicateur de la corde et de l'épaisseur des pales à profils identiques.

La surface d'un profil d'une pale de l'invention est donc égale au quotient de la surface d'un profil correspondant d'un rotor conventionnel et du coefficient multiplicateur à la puissance deux.

Par suite, la masse totale des pales d'un rotor selon l'invention peut correspondre sensiblement à la masse totale des pales d'un rotor de l'état de la technique divisée par le coefficient multiplicateur, en raison de l'augmentation du nombre de pales selon ledit coefficient multiplicateur.

Cette diminution compense alors au moins partiellement voire totalement l'augmentation massique résultant de l'agencement d'un moyeu de grande dimension.

Par suite, le rotor arrière non caréné selon l'invention va à l'encontre de préjugés consistant à penser que le nombre de pales d'un rotor ne peut pas être augmenté pour des raisons massique et physique.

De telles pales réduisent les efforts statiques et dynamiques exercés en vol. Par suite, la synergie des caractéristiques du rotor arrière non caréné selon l'invention tend à limiter les efforts exercés en vol sur une chaîne de commande du pas par rapport à un rotor conventionnel.

Par suite, l'agencement d'un compensateur d'effort voire d'une servocommande peut éventuellement être évité.

Par exemple, le nombre de pales d'un hélicoptère léger muni d'un rotor conventionnel bipale peut être multiplié par un coefficient multiplicateur égal à 2,5 pour obtenir un rotor arrière non caréné selon l'invention à cinq pales.

Conformément aux explications précédentes, un tel rotor arrière non caréné selon l'invention peut donc réduire les efforts statiques et dynamiques exercés en vol par rapport au rotor conventionnel bipale.

Toutefois, le nombre de pales peut être augmenté. Ainsi, la mise en place d'au moins six pales permet de plus de réduire le bruit émis par le rotor.

Par ailleurs, le rotor arrière non caréné selon l'invention peut posséder une plénitude équivalente à un rotor conventionnel dans une couronne du rotor s'étendant radialement du rayon interne au rayon maximal.

Néanmoins, le nombre de pales du rotor arrière non caréné selon l'invention peut être augmenté pour obtenir une plénitude supérieure à la plénitude du rotor conventionnel dans ladite couronne. En reprenant l'exemple précédent, un rotor conventionnel peut comporter deux pales munies de profils présentant chacun une corde de 21 centimètres. Le rotor arrière non caréné selon l'invention peut alors par exemple comporter non pas six pales présentant chacune une corde de 7 centimètres, mais au moins sept pales présentant chacune une corde de 7 centimètres pour augmenter la plénitude du rotor dans ladite couronne.

Une telle caractéristique peut permettre d'obtenir des pales présentant des profils proches de leur finesse maximale. Dès lors, les pales peuvent ne pas être vrillées, ou faiblement vrillées.

En outre, le moyeu comprend une paroi aérodynamique. Dès lors, ce moyeu peut générer une portance additionnelle durant un vol d'avancement pouvant être utile en cas d'arrêt indu du rotor arrière non caréné.

Ce rotor arrière non caréné peut de plus comprendre une ou plusieurs des caractéristiques additionnelles qui suivent.

Par exemple, le rayon interne est sensiblement égal au tiers du rayon maximal, chaque élément aérodynamique de chaque pale s'étendant à partir du corps vers une extrémité libre sur une longueur sensiblement égale aux deux tiers du rayon maximal.

Ces proportions permettent d'obtenir un rotor arrière non caréné pouvant notamment être substitué à un rotor non caréné bipale du type décrit précédemment tout en présentant les avantages susmentionnés.

Par ailleurs, le corps comporte une paroi concave interne reliée à l'arbre d'entraînement et une paroi concave externe solidaire de la paroi concave interne au niveau de ladite périphérie extérieure, la paroi concave interne et la paroi concave externe étant disposées symétriquement de part et d'autre d'un plan médian perpendiculaire audit axe de rotation, la paroi concave interne et la paroi concave externe présentant chacune une concavité en regard d'un espace interne dudit corps.

Le corps présente alors sensiblement une forme de tore ouvert au niveau d'une périphérie interne.

En outre, au moins une desdites parois concaves comporte un disque mince. Une telle paroi permet de produire une portance additionnelle lors d'un vol d'avancement en présentant une incidence par rapport à la vitesse d'avancement de l'aéronef.

Un disque mince est un disque présentant un profil mince. On peut se référer à l'adresse internet http://fr.wikipedia.org/wiki/Th%C3%A9orie des profils minces qui décrit des profils minces.

Par ailleurs, la paroi concave externe peut comporter un orifice central de maintenance autour de l'axe de rotation. Un tel orifice central permet à un opérateur d'avoir accès au centre du moyeu pour des opérations de maintenance.

L'orifice central peut éventuellement est obturé par un capot mobile.

En outre, le corps comporte à ladite périphérie extérieure une ouverture radiale par pale entre la paroi concave interne et la paroi concave externe, le pied de chaque pale étant articulé en rotation autour d'un axe de pas à ladite périphérie extérieure par un palier, chaque palier étant agencé dans une desdites ouvertures entre chaque pied et ledit corps.

Un palier par exemple lamifié permet de tenir le pied de la pale au niveau de ladite périphérie extérieure. De plus, ce palier confère à chaque élément aérodynamique un degré de liberté en rotation autour d'un axe de pas, voire en battement.

En outre, chaque pale comporte un faisceau torsible s'étendant dans ledit corps d'une extrémité solidaire de l'élément aérodynamique de la pale vers une extrémité solidaire dudit corps.

Chaque faisceau torsible peut être relié à un longeron d'une pale pour supporter les efforts centrifuges subis par la pale.

En outre, ce faisceau est qualifié de torsible en raison de sa faculté à se tordre sous l'effet des sollicitations aérodynamiques. Dès lors, le faisceau torsible n'entrave pas la rotation de la pale autour de son axe de pas.

La mise en place d'un moyeu de grandes dimensions permet d'utiliser des faisceaux torsibles de grande longueur pouvant se tordre de manière adéquate.

En particulier, le corps peut comporter une portion centrale solidaire de l'arbre d'entraînement et une paroi concave interne solidaire de la portion centrale, chaque faisceau torsible étant solidarisé à la portion centrale.

Chaque faisceau torsible est alors fixé au plus près de l'axe de rotation du rotor.

Par ailleurs, au moins une pale est une pale droite non vrillée. Une telle pale tend à linéariser le fonctionnement du rotor arrière non caréné.

Néanmoins, les pales peuvent présenter une loi de vrillage.

En outre, les pales sont éventuellement réparties de manière non équidistante circonférentiellement sur la périphérie extérieure.

Par suite, l'arc de cercle séparant deux pales adjacentes peut varier d'une paire de pales à une autre paire de pales.

Une telle caractéristique tend à minimiser le bruit émis par le rotor, en particulier à une fréquence égale au produit du nombre de pales par la vitesse de rotation du rotor arrière.

Par exemple, un rotor arrière muni d'au moins six pales présente une répartition irrégulière des pales circonférentiellement pour limiter le bruit émis par ce rotor arrière.

Par ailleurs, le rotor arrière non caréné selon l'invention comporte une bielle de pas par pale, chaque bielle de pas étant articulée à un levier de pas d'une pale, chaque bielle de pas traversant une lumière transversale du corps.

De plus, le rotor peut comporter un organe relié à chaque bielle de pas, cet organe étant mobile transversalement le long dudit arbre d'entraînement pour qu'une translation dudit organe induise une translation desdites bielles de pas.

En outre, chaque pale comporte deux masses de rappel à plat, dites « masses chinoises », saillant en élévation de part et d'autre d'un pied à l'intérieur du corps.

Si nécessaire, ces masses chinoises peuvent être implémentées pour réduire les efforts à fournir pour modifier le pas des pales.

Outre un rotor arrière non caréné, l'invention vise un aéronef à voilure tournante muni d'un tel rotor arrière non caréné.

L'invention vise aussi un procédé pour agencer un rotor dit « rotor de remplacement » selon l'invention sur un aéronef muni d'un rotor non caréné dit « rotor à remplacer », le rotor à remplacer comprenant au moins deux pales s'étendant jusqu'à une extrémité libre, chaque pale desdits rotors présentant en envergure une succession de profils, chaque profil présentant une corde et une loi d'épaisseur qui sont fonctions de la corde,

Par suite, et conformément aux explications précédentes, ce procédé comporte les étapes suivantes :
- on détermine un rayon dit « rayon maximal » d'un cercle décrit par les pales du rotor à remplacer, et on dimensionne le rotor de remplacement pour que les pales du rotor de remplacement décrivent un cercle présentant ledit rayon maximal,
- on détermine un rayon dit rayon interne d'un corps circulaire d'un moyeu dudit rotor de remplacement compris entre 0,2 et 0,4 fois ledit rayon maximal,
- on détermine un coefficient multiplicateur supérieur à l'unité, le nombre de pales du rotor de remplacement étant au moins égal au produit du nombre de pales du rotor à remplacer par ledit coefficient multiplicateur,
- on agence sur ledit rotor de remplacement un nombre de pales du rotor de remplacement égal au produit du nombre de pales du rotor à remplacer par ledit coefficient multiplicateur, chaque pale du rotor de remplacement comportant des profils identiques aux profils des pales du rotor à remplacer, la corde de chaque profil d'une pale du rotor de remplacement à un rayon dit « rayon de calcul » donné étant égale au quotient de la corde du profil d'une pale du rotor à remplacer audit rayon de calcul par ledit coefficient multiplicateur.

L'invention et ses avantages apparaîtront avec plus de détails dans le cadre de la description qui suit avec des exemples donnés à titre illustratif en référence aux figures annexées qui représentent :
- la figure 1, une vue de côté d'un giravion selon l'invention,
- la figure 2, un schéma détaillent un rotor arrière non caréné selon l'invention,
- la figure 3, un giravion muni d'un rotor à remplacer,
- la figure 4, un schéma d'une section de pale d'un rotor à remplacer,
- la figure 5, le giravion de la figure 3 muni désormais d'un rotor de remplacement suivant l'invention,
- la figure 6, un schéma d'une section de pale du rotor de remplacement de la figure 5.

Les éléments présents dans plusieurs figures distinctes sont affectés d'une seule et même référence.

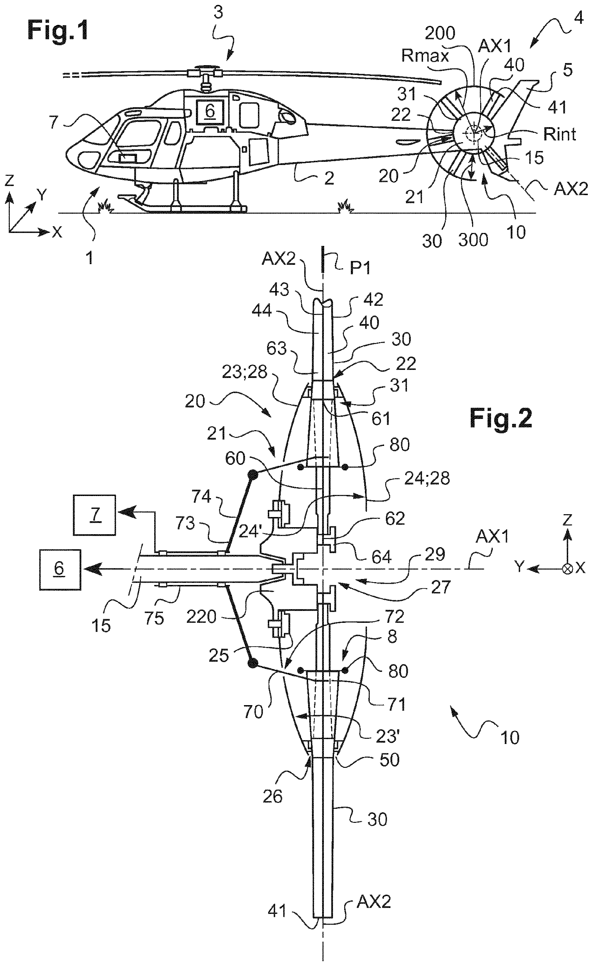

On note que trois directions X, Y et Z orthogonales les unes par rapport aux autres sont représentées sur les figures 1 et 2.

La première direction X est dite longitudinale. La deuxième direction Y est dite transversale. Enfin, la troisième direction Z est dite en élévation.

La figure 1 présente un aéronef 1 à voilure tournante, et en particulier un hélicoptère.

Cet aéronef 1 est muni d'un fuselage 2 portant un rotor de sustentation et de propulsion 3. De plus, le fuselage 2 s'étend longitudinalement jusqu'à une extrémité arrière 4. Cette extrémité arrière 4 est pourvue d'une dérive 5 et d'un rotor arrière non caréné 10 selon l'invention.

Le rotor arrière est dit non caréné en raison de l'absence d'une carène entourant les pales 30 de ce rotor arrière.

Par ailleurs, l'aéronef 1 comporte une installation motrice 6 pour mettre en rotation le rotor de sustentation et de propulsion 3 et le rotor arrière non caréné 10. L'installation motrice comporte alors au moins un moteur relié directement ou indirectement via au moins une boîte de transmission de puissance à un arbre d'entrainement 15 du rotor arrière non caréné 10.

En outre, l'aéronef 1 comporte des moyens de commande 7 pour contrôler collectivement l'angle de pas des pales 30 du rotor arrière non caréné 10. De tels moyens de commande 7 peuvent par exemple comprendre un palonnier.

Le rotor arrière non caréné 10 comprend un moyeu 20 rigidement solidarisé à l'arbre d'entraînement 15. De plus, le rotor arrière non caréné 10 possède au moins cinq pales 30 portées chacune par le moyeu 20.

Ce rotor arrière non caréné 10 est un rotor de grand diamètre. Par suite, chaque pale s'étend vers une extrémité libre 41. Cette extrémité libre 41 décrit alors un cercle 200 de grand diamètre présentant un rayon dit rayon maximal Rmax.

De plus, le moyeu 20 est lui-même un moyeu de grand diamètre.

Par suite, le moyeu 20 comporte un corps 21. Ce corps 21 a une forme circulaire centrée sur l'axe de rotation AX1 du rotor arrière non caréné. Par suite, le corps 21 présente une périphérie extérieure 22 décrivant un cercle. Ce cercle est défini par un rayon dit « rayon interne Rint » s'étendant entre l'axe de rotation AX1 et la périphérie extérieure 22 du corps 21.

Le rayon interne Rint est par suite compris entre 0,2 et 0,4 fois le rayon maximal Rmax. Par conséquent, le moyeu est bien un moyeu de grandes dimensions,

De plus, le corps 21 est un corps creux permettant notamment l'agencement de constituants de la pale dans le moyeu.

Ainsi, chaque pale 30 comporte un pied 31 prolongé par un élément aérodynamique 40.

L'élément aérodynamique 40 saille du corps 21 en s'étendant à partir du pied 31 de la pale et s'étend jusqu'à une extrémité libre 41. Cet élément aérodynamique est notamment caractérisé par une envergure relativement courte, comparée à l'envergure des pales d'un rotor bipale conventionnel.

Par exemple, le rayon interne Rint est égal au tiers du rayon maximal Rmax. Dès lors, chaque élément aérodynamique 40 s'étend en dehors du corps 21 sur une longueur 300 égale aux deux tiers de ce rayon maximal Rmax.

En outre, le pied 31 de chaque pale est articulé en rotation à la périphérie extérieure 22 du moyeu autour d'un axe de pas AX2. Chaque pale est ainsi une pale à pas variable.

La figure 2 détaille un rotor arrière non caréné selon l'invention.

Ainsi, le moyeu 20 peut comporter une couronne annulaire creuse.

Dès lors, le moyeu 20 présenté est muni d'une paroi concave interne 23. Cette paroi concave interne 23 présente une concavité 23' dirigée vers l'intérieur 27 du moyeu.

La paroi concave interne 23 est en outre solidarisée directement ou indirectement à l'arbre d'entraînement 15.

Selon l'exemple de la figure 2, le moyeu 20 comporte une portion centrale 220 fixée à l'arbre d'entraînement 15 par des moyens usuels, tel que des moyens de vissage, de collage, de rivetage, de soudage par exemple.

La paroi concave interne 23 a alors la forme d'un disque évidé en son centre. La paroi concave interne 23 s'étend alors radialement d'une périphérie interne vers une périphérie externe. La périphérie interne est ainsi solidarisée à la portion centrale 220 par des moyens usuels, tels que des moyens de vissage 25, de collage, de rivetage, de soudage, d'agrafage par exemple.

Ce disque peut être un disque mince.

De plus, le moyeu 20 présenté est muni d'une paroi concave externe 24 solidaire de la paroi concave interne 23.

Cette paroi concave externe 24 présente une concavité 24' dirigée vers l'intérieur 27 du moyeu, soit vers la concavité de la paroi concave interne.

La paroi concave externe 24 a la forme d'un disque 28. La paroi concave externe 24 s'étend alors radialement de l'axe de rotation AX1 vers une périphérie externe. La périphérie externe de la paroi concave interne est alors solidarisée à la périphérie externe de la paroi concave externe par des moyens usuels, tels que des moyens de vissage de collage, de rivetage, d'agrafage, de soudage par exemple.

La paroi concave interne et la paroi concave externe peuvent former des parties constitutives d'une même pièce monobloc.

Ce disque de la paroi concave externe 24 peut être un disque mince.

En outre, la paroi concave externe peut comporter un orifice central 29 autour de l'axe de rotation AX1.

En outre, la paroi concave interne 23 et la paroi concave externe 24 sont disposées symétriquement de part et d'autre d'un plan médian P1 perpendiculaire à l'axe de rotation AX1.

Dès lors, le corps 21 présenté comporte sur la périphérie extérieure 22 une pluralité d'ouvertures 26 radiales. Le corps possède donc une ouverture 26 par pale 30 pour permettre le passage de chaque pale au travers d'une ouverture. Chaque ouverture 26 s'étend donc entre la paroi concave interne 23 et la paroi concave externe 24.

Par suite, le pied 31 de chaque pale 30 est articulé en rotation autour d'un axe de pas AX2 à la périphérie extérieure 22. En particulier, un palier 50 est agencé dans chaque ouverture 26 entre une pale et le corps 21.

Par conséquent, chaque pale peut comporter un élément aérodynamique 40 muni d'un revêtement extérieur 42, d'au moins un longeron 43, voire de matériaux de remplissage 44. Le revêtement extérieur peut être une coque rigide présentant le profil aérodynamique adéquat.

Cet élément aérodynamique s'étend en dehors du moyeu 20 de la périphérie extérieure 22 vers une extrémité libre 41.

Chaque pale peut être une pale droite non vrillée. Une pale droite comporte un profil présentant une corde constante. De plus, une pale non vrillée comporte des cordes contenues dans un plan dénommé « plan des cordes ».

De plus, chaque pale comporte un pied 31 agencé dans le moyeu. Ce pied 31 peut être une prolongation de l'élément aérodynamique, ou encore peut prendre la forme d'une collerette solidaire de l'élément aérodynamique par exemple.

En outre, chaque pale peut comporter un faisceau 60 torsible.

Un tel faisceau 60 torsible représente une pièce susceptible d'être vrillée selon au moins un axe. Par exemple, un faisceau torsible comporte une lame en matériaux composites.

Chaque faisceau 60 s'étend dans le corps 21 du moyeu d'une première extrémité 61 vers une deuxième extrémité 62.

La première extrémité 61 est alors solidaire de l'élément aérodynamique 40 de la pale 30. En particulier, la première extrémité 61 est solidarisée au longeron de l'élément aérodynamique par des moyens usuels, tels que des moyens de vissage, d'agrafage, de collage, de rivetage, de soudage par exemple.

La deuxième extrémité 62 est alors solidaire du moyeu. En particulier, la deuxième extrémité 62 est solidarisée à la portion centrale 220 du moyeu par des moyens usuels, tels que des moyens de vissage, d'agrafage, de collage, de rivetage, de soudage par exemple.

Par ailleurs, chaque pale 30 peut comporter deux masses 80 de rappel à plat. Ces deux masses 80 de rappel à plat saillent en élévation de part et d'autre du pied 31 d'une pale à l'intérieur du corps 21, à savoir selon une direction sensiblement parallèle à l'axe de rotation AX1.

En outre, les pales 30 sont éventuellement réparties de manière non équidistante sur la circonférence de la périphérie extérieure 22.

Le rotor arrière non caréné 10 est par ailleurs muni d'une bielle de pas 70 pour chaque pale. Chaque bielle de pas 70 est alors articulée à un levier de pas 71 d'une pale 30. Un tel levier de pas peut comprendre par exemple une chape solidaire du pied 31 de la pale.

De plus, chaque bielle de pas 70 traverse une lumière 72 transversale du corps 21 pour sortir du moyeu.

Dès lors, le rotor arrière non caréné 10 peut comporter un organe 73 relié à chaque bielle de pas 70. Cet organe 73 est mobile transversalement le long de l'arbre d'entraînement 15 pour qu'une translation de cet organe 73 induise une translation des bielles de pas 70, et par suite une modification du pas de pales.

Cet organe 73 comprend par exemple un disque de commande 74 articulé à chaque bielle de pas. De plus, l'organe 73 comporte un siège tubulaire 75 solidaire du disque de commande. Le siège tubulaire est alors monté mobile sur l'arbre d'entraînement 15.

L'organe 73 est relié à des commandes de vol 7, optionnellement via une servocommande voire une compensateur d'efforts.

Un tel rotor arrière non caréné peut être agencé sur un hélicoptère d'un nouveau type.

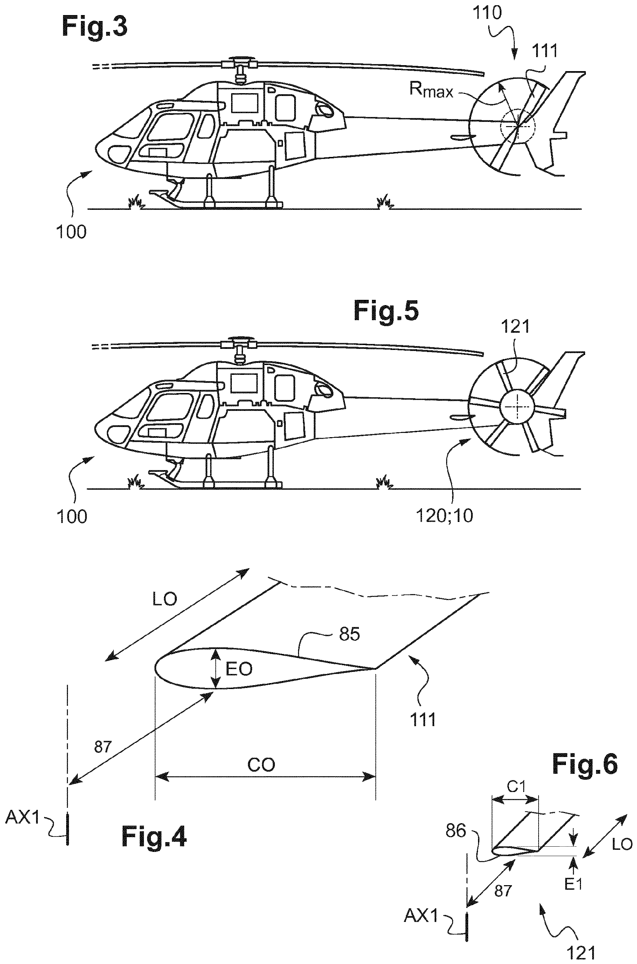

Cependant et en référence à la figure 3, l'invention permet de mettre en oeuvre un procédé pour modifier un aéronef existant 100.

Cet aéronef 100 comprend alors un rotor non caréné dit « rotor à remplacer 110 » par commodité. Le rotor à remplacer 110 est muni d'au moins deux pales 111 s'étendant jusqu'à une extrémité libre, et en particulier de deux pales selon l'exemple de la figure 3.

Dès lors, un constructeur détermine le rayon dit « rayon maximal Rmax » d'un cercle décrit par les pales 111 du rotor à remplacer.

Par suite, le rotor à remplacer de l'aéronef 100 doit être démonté, puis remplacé par un rotor dit « rotor de remplacement 120 » visible sur la figure 5. Ce rotor de remplacement est ainsi muni de pales 121 du rotor de remplacement qui doit décrire un cercle présentant le rayon maximal Rmax. Le rotor de remplacement et un rotor du type de la figure 2.

Par suite, le rotor à remplacer et le rotor de remplacement sont tous deux des rotors non carénés présentant un rayon maximal Rmax.

Pour dimensionner le rotor de remplacement, le constructeur détermine alors, éventuellement avec un ordinateur, le rayon interne Rint du moyeu du rotor de remplacement. Ce rayon interne est fixé entre 0,2 et 0,4 fois le rayon maximal, par exemple 0,3 fois le rayon maximal.

De plus, le constructeur détermine, éventuellement avec un ordinateur, un coefficient multiplicateur n supérieur à l'unité. Le constructeur fixe alors le nombre de pales 121 du rotor de remplacement 120 en multipliant le nombre de pales du rotor à remplacer 110 par le coefficient multiplicateur n.

Selon l'exemple de la figure 5, le coefficient multiplicateur n est égal à 3, le rotor de remplacement ayant six pales 121 au lieu de deux pales 111 pour le rotor à remplacer. Toutefois, le constructeur peut choisir d'augmenter le nombre de pales, par exemple à sept ou huit pales.

En référence à la figure 4, chaque pale 111 du rotor à remplacer présente, entre le rayon interne et le rayon maximal, une succession de profils 85 sur une envergure L0. Chaque profil présente une corde C0 et une épaisseur E0.

En référence à la figure 6, le constructeur peut établir la forme des pales du rotor de remplacement en se basant sur les pales du rotor à remplacer. Dès lors, chaque profil d'une pale du rotor de remplacement est homothétique par rapport à un profil correspondant d'une pale du rotor à remplacer.

Par suite, la corde C1 de chaque profil 86 d'une pale 121 du rotor de remplacement 120 situé à un rayon dit « rayon de calcul 87 » est égale au quotient de la corde C0 du profil 85 d'une pale 111 du rotor à remplacer 110 audit rayon de calcul 87 par le coefficient multiplicateur n soit: C1=C0/n où «/» représente le signe de la division.

De même, l'épaisseur E1 du profil 86 d'une pale 121 du rotor de remplacement 120 situé au rayon de calcul 87 est égale au quotient de l'épaisseur E0 du profil 85 d'une pale 111 du rotor à remplacer 110 audit rayon de calcul 87 par le coefficient multiplicateur n soit : E1=E0/n où « / » représente le signe de la division.

Par suite, le constructeur fabrique le rotor de remplacement et agence ce rotor de remplacement sur l'aéronef 100.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention comme définit dans les revendications suivantes.

## Revendications

1. Rotor arrière non caréné (10) pour un aéronef à voilure tournante (1), ledit rotor arrière non caréné (10) comprenant un moyeu (20) et une pluralité de pales (30), ledit rotor arrière non caréné (10) comprenant un arbre d'entraînement (15) relié audit moyeu (20) pour mettre en rotation lesdites pales (30) autour d'un axe de rotation (AX1), lesdites pales (30) s'étendant chacune jusqu'à une extrémité libre (41) décrivant en rotation un cercle (200) présentant un rayon donné dit « rayon maximal (Rmax) », ledit moyeu (20) étant rigidement solidarisé audit arbre d'entraînement (15), ladite pluralité de pales (30) comportant au moins cinq pales (30), ledit moyeu (20) comprenant un corps (21) circulaire creux centré sur ledit axe de rotation (AX1), ledit corps (21) présentant un rayon dit « rayon interne (Rint) » entre ledit axe de rotation (AX1) et une périphérie extérieure (22) dudit corps (21), chaque pale (30) présentant un pied (31) prolongé par un élément aérodynamique (40) saillant dudit corps (21) en s'étendant à partir dudit pied (31) vers ladite extrémité libre (41), ledit pied (31) étant articulé en rotation à ladite périphérie extérieure (22) autour d'un axe de pas (AX2)
**caractérisé en ce que**, ledit rayon interne (Rint) étant compris entre 0,2 et 0,4 fois ledit rayon maximal (Rmax), ledit corps (21) comportant une paroi concave interne (23) reliée à l'arbre d'entraînement (15) et une paroi concave externe (24) solidaire de la paroi concave interne (23) au niveau de ladite périphérie extérieure (22), la paroi concave interne (23) et la paroi concave externe (24) étant disposées symétriquement de part et d'autre d'un plan médian (P1) perpendiculaire audit axe de rotation (AX1), la paroi concave interne (23) et la paroi concave externe (24) présentant chacune une concavité en regard d'un espace interne (27) dudit corps (21), ledit corps (21) comportant à ladite périphérie extérieure (22) une ouverture (26) radiale par pale (30) entre ladite paroi concave interne (23) et ladite paroi concave externe (24), ledit pied (31) de chaque pale (30) étant articulé en rotation autour d'un axe de pas (AX2) à ladite périphérie extérieure (22) par un palier (50), chaque palier (50) étant agencé dans une desdites ouvertures (26) entre chaque pied (31) et ledit corps (21)..

2. Rotor arrière non caréné selon la revendication 1,
**caractérisé en ce que** ledit rayon interne (Rint) est sensiblement égal au tiers dudit rayon maximal (Rmax), chaque élément aérodynamique (40) de chaque pale s'étendant à partir dudit corps (21) vers une extrémité libre (41) sur une longueur (300) sensiblement égale aux deux tiers dudit rayon maximal (Rmax).

3. Rotor arrière non caréné selon l'une quelconque des revendications 1 à 2,
**caractérisé en ce qu'**au moins une desdites parois concaves (23, 24) comporte un disque mince (28).

4. Rotor arrière non caréné selon l'une quelconque des revendications 1 à 3,
**caractérisé en ce que** ladite paroi concave externe (24) comporte un orifice central (29) de maintenance autour dudit axe de rotation (AX1).

5. Rotor arrière non caréné selon l'une quelconque des revendications 1 à 4,
**caractérisé en ce que** chaque pale (30) comporte un faisceau (60) torsible s'étendant dans ledit corps (21) d'une extrémité (61) solidaire de l'élément aérodynamique (40) de la pale (30) vers une extrémité (62) solidaire dudit corps (21).

6. Rotor arrière non caréné selon la revendication 5,
**caractérisé en ce que** ledit corps (21) comporte une portion centrale (220) solidaire dudit arbre d'entraînement (15) et une paroi concave interne (23) solidaire de ladite portion centrale (220), chaque faisceau (60) torsible étant solidarisé à ladite portion centrale (220).

7. Rotor arrière non caréné selon l'une quelconque des revendications 1 à 6,
**caractérisé en ce qu'**au moins une pale (30) est une pale droite non vrillée.

8. Rotor arrière non caréné selon l'une quelconque des revendications 1 à 7,
**caractérisé en ce que** lesdites pales (30) sont réparties de manière non équidistante circonférentiellement sur ladite périphérie extérieure (22).

9. Rotor arrière non caréné selon l'une quelconque des revendications 1 à 8,
**caractérisé en ce que** ledit rotor arrière non caréné (10) comporte une bielle de pas (70) par pale, chaque bielle de pas (70) étant articulée à un levier de pas (71) d'une pale (30), chaque bielle de pas (70) traversant une lumière (72) transversale dudit corps (21).

10. Rotor arrière non caréné selon la revendication 9,
**caractérisé en ce que** ledit rotor arrière non caréné (10) comporte un organe (73) relié à chaque bielle de pas (70), ledit organe (73) étant mobile transversalement le long dudit arbre d'entraînement (15) pour qu'une translation dudit organe (73) induise une translation desdites bielles de pas (70).

11. Rotor arrière non caréné selon l'une quelconque des revendications 1 à 10,
**caractérisé en ce que** chaque pale (30) comporte deux masses (80) de rappel à plat saillant en élévation de part et d'autre d'un pied (31) à l'intérieur dudit corps (21).

12. Rotor arrière non caréné selon l'une quelconque des revendications 1 à 11,
**caractérisé en ce que** ledit rayon interne (Rint) est compris entre 0,25 et 0,4 fois ledit rayon maximal (Rmax).

13. Aéronef à voilure tournante (1) muni d'un rotor arrière non caréné,
**caractérisé en ce que** ledit rotor arrière non caréné (10) est selon l'une quelconque des revendications 1 à 12.

14. Procédé pour agencer un rotor dit « rotor de remplacement (120) » selon l'une quelconque des revendications 1 à 12 sur un aéronef muni d'un rotor non caréné dit « rotor à remplacer (110) », ledit rotor à remplacer (110) comprenant au moins deux pales (111) s'étendant jusqu'à une extrémité libre, chaque pale (111, 121) desdits rotors (110, 120) présentant en envergure une succession de profils (85, 86), chaque profil (85, 86) présentant une corde (C0, C1) et une loi d'épaisseur (E0, E1) qui sont fonctions de la ladite corde (C0, C1),
**caractérisé en ce que**, ledit procédé comporte les étapes suivantes :
- on détermine un rayon dit « rayon maximal (Rmax) » d'un cercle décrit par les pales du rotor à remplacer, et on dimensionne le rotor de remplacement pour que les pales du rotor de remplacement décrivent un cercle présentant ledit rayon maximal,
- on détermine un rayon dit rayon interne (Rint) d'un corps circulaire d'un moyeu dudit rotor de remplacement compris entre 0,2 et 0,4 fois ledit rayon maximal,
- on détermine un coefficient multiplicateur (n) supérieur à l'unité, le nombre de pales (121) du rotor de remplacement (120) étant au moins égal au produit du nombre de pales du rotor à remplacer (110) par ledit coefficient multiplicateur (n),
- on agence sur ledit rotor de remplacement (120) un nombre de pales (121) du rotor de remplacement (120) égal au produit du nombre de pales (111) du rotor à remplacer (110) par ledit coefficient multiplicateur (n), chaque pale (121) du rotor de remplacement (120) comportant des profils identiques aux profils des pales (111) du rotor à remplacer (110), la corde (C1) de chaque profil (86) d'une pale (121) du rotor de remplacement (120) à un rayon dit « rayon de calcul 87) » donné étant égale au quotient de la corde (C0) du profil (85) d'une pale (111) du rotor à remplacer (110) audit rayon de calcul (87) par ledit coefficient multiplicateur (n).

## Patentansprüche

1. Nicht verkleideter Heckrotor (10) für ein Drehflügelflugzeug (1), wobei der nicht verkleidete Heckrotor (10) eine Nabe (20) und eine Mehrzahl von Rotorblättern (30) aufweist, wobei der nicht verkleidete Heckrotor (10) eine Antriebswelle (15) aufweist, die mit der Nabe (20) verbunden ist, um die Rotorblätter (30) um eine Rotationsachse (AX1) zu drehen, wobei die Rotorblätter (30) sich jeweils bis zu einem freien Ende (41) erstrecken, das während des Drehens einen Kreis (200) beschreibt, der einen "maximaler Radius (Rmax)" genannten gegebenen Radius aufweist, wobei die Nabe (20) fest mit der Antriebswelle (15) verbunden ist, wobei die Mehrzahl von Rotorblättern (30) mindestens fünf Rotorblätter (30) aufweist, wobei die Nabe (20) einen hohlen, kreisförmigen Körper (21) aufweist, der auf der Rotationsachse (AX1) zentriert ist, wobei der Körper (21) einen "innerer Radius (Rint)" genannten Radius zwischen der Rotationsachse (AX1) und einem äußeren Umfang (22) des Körpers (21) aufweist, wobei jedes Rotorblatt (30) einen Fuß (31) aufweist, der durch ein aerodynamisches Element (40) verlängert wird, das gegenüber dem Körper (21) vorsteht und sich ausgehend von dem Fuß (31) zu dem freien Ende (41) hin erstreckt, wobei der Fuß (31) drehbeweglich um eine Winkelverstellachse (AX2) an dem äußeren Umfang (22) angelenkt ist,
**dadurch gekennzeichnet, dass** der innere Radius (Rint) zwischen 0,2 und 0,4 mal dem maximalen Radius (Rmax) beträgt, wobei der Körper (21) eine konkave Innenwand (23) aufweist, die mit der Antriebswelle (15) verbunden ist, und eine konkave Außenwand (24), die mit der konkaven Innenwand (23) auf der Höhe des Außenumfangs (22) fest verbunden ist, wobei die konkave Innenwand (23) und die konkave Außenwand (24) symmetrisch zu beiden Seiten einer zur Rotationsachse (AX1) senkrechten Mittelebene (P1) angeordnet sind, wobei die konkave Innenwand (23) und die konkave Außenwand (24) jeweils eine Konkavität bezüglich eines Innenraums (27) des Körpers (21) aufweisen, wobei der Körper (21) an dem äußeren Umfang (22) eine radiale Öffnung (26) pro Rotorblatt (30) zwischen der konkaven Innenwand (23) und der konkaven Außenwand (24) aufweist, wobei der Fuß (31) eines jeden Rotorblatts (30) um eine Winkelverstellachse (AX2) drehbeweglich an dem äußeren Umfang (22) durch ein Lager (50) angelenkt ist, wobei jedes Lager (50) in einer der Öffnungen (26) zwischen jedem Fuß (31) und dem Körper (21) angeordnet ist.

2. Nicht verkleideter Heckrotor nach Anspruch 1,
**dadurch gekennzeichnet, dass** der Innenradius (Rint) im Wesentlichen gleich einem Drittel des maximalen Radius (Rmax) ist, wobei jedes aeordynamische Element (40) eines jeden Rotorblatts sich ausgehend von dem Körper (21) über eine Länge (300), die im Wesentlichen gleich zwei Dritteln des maximalen Radius (Rmax) ist, auf ein freies Ende (41) hin erstreckt.

3. Nicht verkleideter Heckrotor nach einem der Ansprüche 1 bis 2,
**dadurch gekennzeichnet, dass** mindestens eine der konkaven Wände (23, 24) eine dünne Scheibe (28) aufweist.

4. Nicht verkleideter Heckrotor nach einem der Ansprüche 1 bis 3,
**dadurch gekennzeichnet, dass** die äußere konkave Wand (24) eine zentrale Öffnung (29) zur Instandsetzung um die Rotationsachse (AX1) aufweist.

5. Nicht verkleideter Heckrotor nach einem der Ansprüche 1 bis 4,
**dadurch gekennzeichnet, dass** jedes Rotorblatt (30) ein verwindbares Bündel (60) aufweist, das sich in dem Körper (21) von einem Ende (61), das mit dem aerodynamischen Element (40) des Rotorblatts (30) fest verbunden ist, zu einem Ende (62), das mit dem Körper (21) fest verbunden ist, erstreckt.

6. Nicht verkleideter Heckrotor nach Anspruch 5,
**dadurch gekennzeichnet, dass** der Körper (21) einen zentralen Abschnitt (220) aufweist, der mit der Antriebswelle (15) fest verbunden ist, und eine konkave Innenwand (23), die mit dem zentralen Abschnitt (220) fest verbunden ist, wobei jedes verwindbare Bündel (60) mit dem zentralen Abschnitt (220) fest verbunden ist.

7. Nicht verkleideter Heckrotor nach einem der Ansprüche 1 bis 6,
**dadurch gekennzeichnet, dass** mindestens ein Rotorblatt (30) ein gerades, nicht verdrilltes Rotorblatt ist.

8. Nicht verkleideter Heckrotor nach einem der Ansprüche 1 bis 7,
**dadurch gekennzeichnet, dass** die Rotorblätter (30) in Umfangsrichtung nicht gleich beabstandet auf dem äußeren Umfang (22) verteilt sind.

9. Nicht verkleideter Heckrotor nach einem der Ansprüche 1 bis 8,
**dadurch gekennzeichnet, dass** der nicht verkleidete Heckrotor (10) eine Winkelverstellstange (70) aufweist, die eine transversale Öffnung (72) des Körpers (21) durchquert.

10. Nicht verkleideter Heckrotor nach Anspruch 9,
**dadurch gekennzeichnet, dass** der nicht verkleidete Heckrotor (10) ein Element (73) aufweist, das mit jeder Winkelverstellstange (70) verbunden ist, wobei das Element (73) in Querrichtung entlang der Antriebswelle (15) beweglich ist, damit eine Verschiebung des Elements (73) eine Verschiebung der Winkelverstellstange (70) bewirkt.

11. Nicht verkleideter Heckrotor nach einem der Ansprüche 1 bis 10,
**dadurch gekennzeichnet, dass** jedes Rotorblatt (30) zwei flache Rückstellmassen (80) aufweist, die in der Höhe zu beiden Seiten eines Fußes (31) im Inneren des Körpers (21) vorstehen.

12. Nicht verkleideter Heckrotor nach einem der Ansprüche 1 bis 11,
**dadurch gekennzeichnet, dass** der Innenradius (Rint) zwischen 0,25 und 0,4 mal dem maximalen Radius (Rmax) beträgt.

13. Drehflügelflugzeug (1) mit einem nicht verkleideten Heckrotor,
**dadurch gekennzeichnet, dass** der nicht verkleidete Heckrotor (10) ein nicht verkleideter Heckrotor nach einem der Ansprüche 1 bis 12 ist.

14. Verfahren zum Anordnen eines "Austauschrotor (120)" genannten Rotors nach einem der Ansprüche 1 bis 12 an einem Flugzeug, das mit einem "auszutauschender Rotor (110)" genannten nicht verkleideten Rotor versehen ist, wobei der auszutauschende Rotor (110) mindestens zwei Rotorblätter (111) aufweist, die sich bis zu einem freien Ende erstrecken, wobei jedes Rotorblatt (111, 121) der Rotoren (110, 120) in Spannweitenrichtung eine Aufeinanderfolge von Profilen (85, 86) aufweist, wobei jedes Profil (85, 86) eine Sehne (CO, C1) und eine Dickenregel (E0, E1), die von der Sehne (CO, C1) abhängt, aufweist,
**dadurch gekennzeichnet, dass** das Verfahren folgende Schritte aufweist:
- ein "maximaler Radius (Rmax)" genannter Radius eines Kreises bestimmt wird, der von den Rotorblättern des auszutauschenden Rotors beschrieben wird, und der Austauschrotor so dimensioniert wird, dass die Rotorblätter des Austauschrotors einen Kreis beschreiben, der den maximalen Radius aufweist,
- ein innerer Radius (Rint) genannter Radius eines kreisförmigen Körpers einer Nabe des Austauschrotors so bestimmt wird, dass er zwischen 0,2 und 0,4 mal dem maximalen Radius entspricht,
- ein Multiplikationskoeffizient (n) größer als eins bestimmt wird, wobei die Anzahl der Rotorblätter (121) des Austauschrotors (120) mindestens gleich dem Produkt aus der Anzahl der Rotorblätter des auszutauschenden Rotors (110) und dem Multiplikationskoeffizienten (n) ist,
- auf dem Austauschrotor (120) eine Anzahl von Rotorblättern (121) des Austauschrotors (120) angeordnet wird, die gleich dem Produkt aus der Anzahl der Rotorblätter (111) des auszutauschenden Rotors (110) und dem Multiplikationskoeffizienten (n) ist, wobei jedes Rotorblatt (121) des Austauschrotors (120) Profile aufweist, die identisch mit den Profilen der Rotorblätter (111) des auszutauschenden Rotors (110) sind, wobei die Sehne (C1) eines jeden Profils (86) eines Rotorblatts (121) des Austauschrotors (120) einen "berechneter Radius (87)" genannten gegebenen Radius aufweist, der gleich dem Quotienten aus der Sehne (CO) des Profils (85) eines Rotorblatts (111) des auszutauschenden Rotors (110) mit dem berechneten Radius (87) dividiert durch den Multiplikationskoeffizienten (n) ist.

## Claims

1. Non-ducted tail rotor (10) for a rotary wing aircraft (1), said non-ducted tail rotor (10) comprising a hub (20) and a plurality of blades (30), said non-ducted tail rotor (10) comprising a drive shaft (15) connected to said hub (20) in order to set said blades (30) into rotation about an axis of rotation (AX1), each of said blades extending to a free end (41) describing in rotation a circle (200) having a given radius referred to as the "maximum radius (Rmax)", said hub (20) being rigidly secured to said drive shaft (15), said plurality of blades (30) comprising at least five blades (30), said hub (20) comprising a hollow circular body (21) centred on said axis of rotation (AX1), said body (21) having a radius referred to as the "internal radius (Rint)" between said axis of rotation (AX1) and an outer periphery (22) of said body (21), each blade (30) having a root (31) extended by an aerodynamic element (40) projecting from said body (21) on extending from said root (31) to said free end (41), said root (31) being articulated in rotation to said outer periphery (22) about a pitch axis (AX2)
**characterised in that**, said internal radius (Rint) being comprised between 0.2 and 0.4 times said maximum radius (Rmax), said body (21) comprising an internal concave wall (23) connected to the drive shaft (15) and an external concave wall (24) secured to the internal concave wall (23) at the level of said outer periphery (22), the internal concave wall (23) and the external concave wall (24) being arranged symmetrically on one side and on the other side of a median plane (P1) perpendicular to said axis of rotation (AX1), the internal concave wall (23) and the external concave wall (24) each having a concavity facing an inside space (27) of said body (21), said body (21) comprising at said outer periphery (22) one radial opening (26) per blade (30) between said internal concave wall (23) and said external concave wall (24), said root (31) of each blade (30) being articulated in rotation about a pitch axis (AX2) at said outer periphery (22) by a bearing (50), each bearing (50) being arranged in one of said openings (26) between each root (31) and said body (21).

2. Non-ducted tail rotor according to claim 1,
**characterised in that** said internal radius (Rint) is substantially equal to one-third of said maximum radius (Rmax), each aerodynamic element (40) of each blade extending from said body (21) to a free end (41) over a length (300) substantially equal to two-thirds of said maximum radius (Rmax).

3. Non-ducted tail rotor according to any one of claims 1 to 2,
**characterised in that** at least one of said concave walls (23, 24) comprises a thin disc (28).

4. Non-ducted tail rotor according to any one of claims 1 to 3,
**characterised in that** said external concave wall (24) comprises a maintenance central orifice (29) around said axis of rotation (AX1).

5. Non-ducted tail rotor according to any one of claims 1 to 4,
**characterised in that** each blade (30) comprises a twistable bundle (60) extending in said body (21) from one end (61) secured to the aerodynamic element (40) of the blade (30) to an end (62) secured to said body (21).

6. Non-ducted tail rotor according to claim 5,
**characterised in that** said body (21) comprises a central portion (220) secured to said drive shaft (15) and an internal concave wall (23) secured to said central portion (220), each twistable bundle (60) being secured to said central portion (220).

7. Non-ducted tail rotor according to any one of claims 1 to 6,
**characterised in that** at least one blade (30) is a straight non-twisted blade.

8. Non-ducted tail rotor according to any one of claims 1 to 7,
**characterised in that** said blades (30) are distributed circumferentially in non-equidistant manner on said outer periphery (22).

9. Non-ducted tail rotor according to any one of claims 1 to 8,
**characterised in that** said non-ducted tail rotor (10) comprises one pitch rod (70) per blade, each pitch rod (70) being articulated to a pitch lever (71) of a blade (30), each pitch rod (70) passing through a transverse slot (72) of said body (21).

10. Non-ducted tail rotor according to claim 9,
**characterised in that** said non-ducted tail rotor (10) comprises a member (73) connected to each pitch rod (70), said member (73) being movable transversely along said drive shaft (15) so that a translation of said member (73) induces a translation of said pitch rods (70).

11. Non-ducted tail rotor according to any one of claims 1 to 10,
**characterised in that** each blade (30) comprises two return-to-flat masses (80) projecting in elevation on one side and on the other side of a root (31) inside said body (21).

12. Non-ducted tail rotor according to any one of claims 1 to 11,
**characterised in that** said internal radius (Rint) is comprised between 0.25 and 0.4 times said maximum radius (Rmax).

13. Rotary wing aircraft (1) provided with a non-ducted tail rotor,
**characterised in that** said non-ducted tail rotor (10) is according to any one of claims 1 to 12.

14. Method of arranging a rotor referred to as the "replacement rotor (120)" according to any one of claims 1 to 12 on an aircraft provided with a non-ducted rotor referred to as the "rotor to be replaced (110)", said rotor to be replaced (110) comprising at least two blades (111) extending to a free end, each blade (111, 121) of said rotors (110, 120) having a spanwise succession of profiles (85, 86), each profile (85, 86) having a chord (C0, C1) and a thickness relationship (E0, E1) that are functions of said chord (C0, C1),
**characterised in that**, said method comprises the following steps:
- determining a radius referred as the "maximum radius (Rmax)" of a circle described by the blades of the rotor to be replaced, and dimensioning the replacement rotor so that the blades of the replacement rotor describe a circle having said maximum radius,
- determining a radius referred to as the internal radius (Rint) of a circular body of a hub of said replacement rotor comprised between 0.2 and 0.4 times said maximum radius,
- determining a multiplier coefficient (n) greater than unity, the number of blades (121) of the replacement rotor (120) being at least equal to the product of the number of blades of the rotor to be replaced (110) by said multiplier coefficient (n),
- arranging on said replacement rotor (120) a number of blades (121) of the replacement rotor (120) equal to the product of the number of blades (111) of the rotor to be replaced (110) by said multiplier coefficient (n), each blade (121) of the replacement rotor (120) comprising profiles identical to the profiles of the blades (111) of the rotor to be replaced (110), the chord (C1) of each profile (86) of a blade (121) of the replacement rotor (120) at a given radius referred to as the "calculation radius 87" being equal to the quotient of the chord (C0) of the profile (85) of a blade (111) of the rotor to be replaced (110) at said calculation radius (87) by said multiplier coefficient (n).
